# EUROPEAN PATENT APPLICATION

(11) **EP 2 386 992 A1**
(43) Date of publication of application: **16.11.2011**
(21) Application number: 10162800.6
(22) Date of filing: 13.05.2010
(51) Int. Cl.: G06Q 30/00

(54) **Combination of a control unit and a display unit**

(71) Applicant: Ecker, Gerd, 55232 Alzey (DE); Ecker, Sandra, 67677 Enkenbach-Alsenborn (DE); Wedrich, Klaus, 55270 Engelstadt (DE)
(72) Inventor: Ecker, Gerd, 55232 Alzey (DE); Ecker, Sandra, 67677 Enkenbach-Alsenborn (DE); Wedrich, Klaus, 55270 Engelstadt (DE)
(74) Representative: Deckers, Hellmuth Alexander

(57) **Abstract**

The invention relates to a combined display and display control unit to display text and/or pictures, the said combined display and display control unit comprising a panel display, a display control unit for the panel display which feeds information consisting of pictures and/or text information to the panel display, and converts the said information to a pixel image for the display, an energy supply unit for the panel display which provides the energy needed to maintain a display status to the panel display, a communication module which provides the said display control unit with data relating to the present status of the display unit, a receiving module which receives the information to be displayed in the panel display from a storage section in the said display control unit, wherein in the display control unit, the information to be displayed is selected from the storage according to the present status of the display unit, and transmitted to the display unit, and the display control unit and the display are spatially separated.

## Description

The invention relates to a combination of a control unit and a display unit which latter displays text and/or pictures and is externally controllable by the said control unit.

Display units optically displaying text, pictures, or symbols, or combinations of these, together referred to herein as "information", are generally known from computing equipment, from instruments, from entertainment devices etc. They are usually connected with the information source, viz. the computer, the measuring device, or the video source by being a part of the same housing, or by a cable and also wireless connections such as Bluetooth. Source and display are usually within a short distance from each other, typically not more than 1 m, or in special cases like in public advertisement displays, up to 10 m.

As a display must be clearly visible to the observer, large displays which are targeted to a plurality of observers are usually separated from the observer by more than 2 m, need a high amount of energy to build and maintain a pattern corresponding to a text and/or picture, and also for lighting the said display unit. This requirement has blocked the use of mobile displays for a long time, as it is also needed to transport energy sources along with the information sources. Many display types, particularly those for large display sizes, are also prone to damage by the vibration and shock caused by transportation.

Displays based on layers of liquid crystal materials in combination with polarisers, and selective addressing of individual display elements by building an electric field across one cell element can have good resolution, and also low energy consumption. However, it is difficult to make large display panels that do not show randomly dispersed "black dots" due to the problem of manufacturing very large transparent panels with the needed thin film transistors or capacitors for the individual pixels. Occurrence of such problems increases, of course, with the size of the panel.

Light emitting diodes ("LEDs") of various colours can also be arranged in an area to form a display panel, these systems have also low energy consumption and very good brightness. The discovery and introduction of organic light emitting diodes, the so-called "OLEDs", has triggered a display technology which is competitively priced, has low energy consumption, good brightness and contrast, and also resistance to shock and vibration.

Displays based on this LED or OLED technology can therefore advantageously be used as mobile displays, particularly also large area mobile displays. It is, of course, also possible to form large area displays by combining a plurality of smaller displays.

Present public advertisement, i. e. advertisement which is not in printed media such as newspapers or magazines, or distributed by wireless media such as radio or television, is generally in print form (large posters printed on paper or textiles, revolving posters printed on textile or plastic substrates which are stored on rolls and changed within selectable time frames) or in the form of illuminated large screens, e. g., by projection or backlit LCDs, these two being passive displays, or with luminous elements such as incandescent lamps, plasma displays, or LEDs, these latter being active displays.

These illuminated screens have the advantage that the text or pictures displayed are variable, and usually change on a short time scale, to attract more attention. The disadvantage, however, is their large mass, due to the mass or weight of the elements making up the pixels, and also due to the mass of the energy supply needed for illumination. This large mass has prevented so far the introduction of active displays as mobile displays.

Stationary displays have been described, i. a., in EP 1 898 351 A1. This relates to a system comprising editing means, whereby advertisement data may be individually adapted, and distributed to the proper address via a distribution server, e. g. over a network, and which operates two displays, one being a read-only type display, and the other being an editable display unit which can read user data from an input device, and store user input into a memory. There is no suggestion to have a mobile display, and no suggestion to adapt the display according to a geographical position.

A mobile communication network has been described in EP 1 191 801 A2 including a mobile switching centre which controls a base station controller, which latter in turn controls a plurality of cell emitter stations working each together with a plurality of user terminals (cell phones). The memory of these user terminals may contain secured data which control the display of certain information, and detail thereof, which are constantly broadcast by the cell emitter stations. This document does not disclose large area displays for public viewing, nor control of the information displayed according to the geographic location of the display.

A method for targeting public advertising, and an apparatus therefor has been described in WO 01/63206 A1. This method reacts to persons in the vicinity of the display unit, via electronic cards that are carried by these persons. Information about these persons is read by a communicating unit, transferred to a central computer where the collected information is processed, and targeted data for individualised advertisements is sent from the central computer to the display unit. This document does not describe a mobile display, the geographical location thereof being used to adapt the advertisement information displayed.

It can often be seen that trucks or buses or other vehicles with large areas which are preferably not or only to a small extent, interrupted by windows, are used for advertisements, in printed or painted form. These are static displays, however, and cannot easily be changed.

There is a need to be able to change these advertisements, particularly in trucks or trains as carriers, according to the location or region where the carrier presently is, such as the language if a truck or train travels through more than one country, or the regional needs for the advertisement itself. The low energy consumption, as well as the low mass of the display itself, of LEDs, and particularly, OLEDs makes it possible to use this technology in mobile displays that can be changed according to need.

It is therefore the object of this invention to provide a mobile display system that has a large display area, a low mass, and a remote control system that allows to change the information displayed without the need of individual changes being made on the carrier itself.

The invention thus provides a combined display and display control unit to display text and/or pictures, the said combined display and display control unit comprising
- a mobile panel display,
- a display control unit for the mobile panel display which feeds information consisting of pictures and/or text information to the mobile panel display, and converts the said information to a pixel image for the display,
- an energy supply unit for the panel display which provides the energy needed to maintain a display status to the mobile panel display,
- a communication module which provides the said display control unit with data relating to the present status of the display unit,
- a receiving module which receives the information to be displayed in the panel display from a storage section in the said display control unit,
wherein
- in the display control unit, the information to be displayed is selected from the storage according to the present status of the display unit, and transmitted to the display unit, and
- the display control unit and the mobile panel display are spatially separated.

In a preferred embodiment, the invention also provides a combination of a stationary external control unit and the combined display and control unit as described supra wherein the control unit of the said combined display and control unit interacts with the said stationary external control unit.

In a further preferred embodiment, the invention also provides a combination of a stationary external control unit and a combined display and control unit wherein the combined display and control unit is mobile, and comprises a position sensor which position sensor detects and transmits the actual time and present geographical position of the mobile display unit to a receiver of an external control unit.

In a further preferred embodiment, the invention also provides a display and display control unit which comprises a mobile panel display which is based on the OLED technology which can also be combined with an external control unit.

In a further preferred embodiment, the invention also provides a combination of a stationary external control unit and a combined display and control unit wherein the communication is effected by wireless broadcast or wireless LAN.

In a further preferred embodiment, the invention also provides a combination of a stationary external control unit and a combined display and control unit wherein the information to be displayed is advertisement information, and the geographical position information submitted by the combined display and display control unit to the external control unit is accumulated in the said external control unit by geographical zones and the time period in which the combined display and display control unit remains within the bounds of the said geographical zones.

In a further preferred embodiment, the invention also provides a combination of a stationary external control unit and a combined display and control unit wherein the information to be displayed is advertisement information, and wherein the advertisement information is selected according to the present position or present zone of positions as provided by the combined display and display control unit.

The invention is further explained by the attached figure,

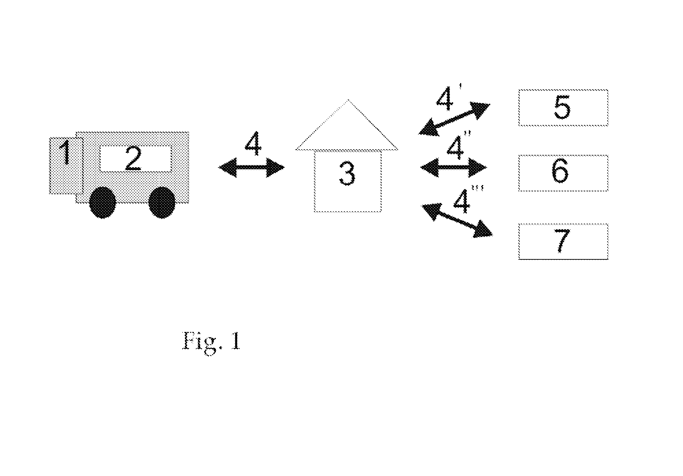

Fig. 1 which shows the components of the combined display and display control unit according to the invention, viz. a panel display which is a part of a mobile object, a stationary external control unit, and external information sources that provide information to the stationary external control unit via communication channels.

One embodiment is depicted in Fig. 1 which includes a mobile panel display 2 affixed to a mobile object 1 which is symbolised in this figure by a truck, a stationary control unit 3 which has a two-way communication channel 4 which links the stationary control unit 3 with a display control unit which is a part of mobile object 1. The stationary control unit 3 in turn is connected to external information sources, three such external information sources 5, 6, and 7 being depicted in this figure 1 by way of example, by further communication channels 4', 4", and 4"' to enable transfer of information in both directions.

By way of example, external information source 5 may be an interface of an advertising agency that supplies advertisement pictures and/or text via communication channel 4' to a publication agency that runs the stationary control unit 3, and distributes such advertisement to mobile panel display 2.

As another example, external information source 6 may be a traffic control authority that may be entitled to use the mobile display unit to publish warning messages or alerts to traffic participants such as indicating traffic congestions, giving advice for deviations, etc. by displaying via the stationary control unit 3 appropriate information on the mobile panel display 2.

As a further example, external information source 7 may be an interface of a further advertising agency that supplies advertisement pictures and/or text via communication channel 4"' to the publication agency that runs the stationary control unit 3, and distributes such advertisement to mobile panel display 2. Such dual advertising communication lines ensure that display information can pass to the mobile panel display 2 without interruption if the display is to be changed due to a different location, or different time.

The position of the mobile display and control unit is preferably provided by location services such as GSM (Global System for Mobile communication), this means that an appropriate send and receive unit must be included in the mobile control unit or the mobile display unit.

For internal purposes such as billing for advertisements, the mobile control unit, i. e. the control unit locally linked to the display unit, records the information displayed, location data and the associated time. This is preferably effected by an additional module in the external control unit to record, for each display unit, the time period spent in predefined geographical zones, and the type of advertisement displayed during this said time period, wherein in this said module, the time period data and the type of advertisement data are combined with the origin of the advertisement data, and pricing data according to geographical location or area, which are read from a central storage system to calculate a price to be charged to the originator of the advertisement data.

The display panels used, particularly a LED based panel, and more preferably, an OLED based panel, have good visibility during the day, and particularly in the case of an OLED display, a low mass which makes it fit for mounting to the sides and rear part of trucks or buses, as well as trains and street cars.

A particularly attractive application is to display advertisements on trucks or buses which can be changed according to geographical region or location, where for similar advertisement, for instance, merely the language of the text contained therein is changed according to the country or region, or the subject of the advertisement can be changed depending, for instance, on whether the display is in a city or in a rural environment. It may even be useful to display information on traffic conditions, such as suggested deviations if a highway is blocked etc. The information to be displayed is then traffic alert or traffic condition information, and the geographical position information submitted by the combined mobile display and display control unit to the external control unit is used to display appropriate condition and/or alert messages selected according to the geographical zones and the time period in which the combined display and display control unit remains within the bounds of the said geographical zones. Such messages may be linked to a sponsor who may appear especially attractive in such conditions. Another possibility for changing and adapting the advertisement is according to the recent weather condition, which can easily be seen in the external control unit via internet based information, or even sensors that are added to the mobile combined display and control unit.

## Claims

1. A combined display and display control unit to display text and/or pictures, the said combined display and display control unit comprising
- a mobile panel display (2),
- a display control unit for the mobile panel display which feeds information consisting of pictures and/or text information to the mobile panel display, and converts the said information to a pixel image for the display,
- an energy supply unit for the mobile panel display which provides the energy needed to maintain a display status to the mobile panel display,
- a communication module which provides the said display control unit with data relating to the present status of the display unit,
- a receiving module which receives the information to be displayed in the mobile panel display from a storage section in the said display control unit,
wherein
- in the display control unit, the information to be displayed is selected from the storage according to the present status of the display unit, and transmitted to the display unit, and
- the display control unit and the mobile panel display are spatially separated.

2. A combination of a stationary external control unit (3) and the combined mobile panel display (2) and control unit therefor of claim 1 wherein the control unit of the said combined display and control unit interacts with the said stationary external control unit via communication channels (4).

3. The combination of claim 2 of a stationary external control unit (3)and a combined mobile panel display (2) and control unit wherein the combined display and control unit is mobile, and comprises a position sensor which position sensor detects and transmits the actual time and present position of the mobile display unit to a receiver of an external control unit (3) via a communication channel (4).

4. The combined display and display control unit of claim 1 which comprises a mobile panel display (2) which is based on the OLED technology.

5. The combination of claim 3 which comprises a mobile panel display (2) which is based on the OLED technology.

6. The combination of any of claims 2, 3, and 5 wherein the communication is effected by wireless broadcast or wireless LAN.

7. The combination of any of claims 3, 5, and 6 wherein the information to be displayed is advertisement information, and the geographical position information submitted by the combined mobile display (2) and display control unit to the external control unit (3) is accumulated in the said external control unit by geographical zones and the time period in which the combined display and display control unit remains within the bounds of the said geographical zones.

8. The combination of claim 7 wherein the advertisement information is selected according to the present position or present zone of positions as provided by the combined mobile panel display (2) and display control unit.

9. The combination of claim 7 which additionally comprises in the external control unit (3) a module to record, for each display unit, the time period spent in predefined geographical zones, and the type of advertisement displayed during this said time period, wherein in this said module, the time period data and the type of advertisement data are combined with the origin of the advertisement data, and pricing data according to geographical location or area, which are read from a central storage system to calculate a price to be charged to the originator of the advertisement data.

10. The combination of any of claims 3, 5, and 6 wherein the information to be displayed is traffic alert or traffic condition information, and the geographical position information submitted by the combined mobile display (2) and display control unit to the external control unit (3) is used to display appropriate condition and/or alert messages selected according to the geographical zones and the time period in which the combined display and display control unit remains within the bounds of the said geographical zones.
